# EUROPÄISCHE PATENTSCHRIFT

(11) **EP 2 757 761 B1**
(45) Veröffentlichungstag und Bekanntmachung des Hinweises auf die Patenterteilung: **18.09.2019**
(21) Anmeldenummer: 14000045.6
(22) Anmeldetag: 07.01.2014
(51) Int. Cl.: G06F 21/44, H04L 29/06, H04W 12/06, H04W 84/12, H04M 1/04, G06F 1/16, H04M 1/725, H04W 4/80

(54) **Dockingstation und Verfahren für die Anbindung eines mobilen Kommunikationsendgeräts an eine zumindest teilweise drahtbasierte Kommunikationsinfrastruktur**
Docking station and method for the connection of a mobile communication terminal to a communications infrastructure that is at least partially wire-based
Station d'accueil et procédé de connexion d'un terminal de communication mobile à une infrastructure de communication au moins partiellement filaire

(30) Priorität: 17.01.2013 DE 102013000789
(43) Veröffentlichungstag der Anmeldung: 23.07.2014
(73) Patentinhaber: Unify GmbH & Co. KG, 80807 München (DE)
(72) Erfinder: Totzke, Jürgen, 85586 Poing (DE); Zeiner, Johann, 85757 Karlsfeld (DE); Kucukerdonmez, Melih, 06830 Ankara (TR)
(74) Vertreter: Fritzsche, Thomas

(56) Entgegenhaltungen:
- US-A1- 2008 252 419
- US-A1- 2009 197 642
- US-A1- 2010 083 012

## Beschreibung

Die vorliegende Erfindung betrifft eine Dockingstation für die Anbindung eines mobilen Kommunikationsendgeräts an eine zumindest teilweise drahtbasierte Kommunikationsinfrastruktur, ein Kommunikationssystem, welches eine derartige Dockingstation enthält, sowie ein Verfahren für die Anbindung eines mobilen Kommunikationsendgeräts an eine zumindest teilweise drahtbasierte Kommunikationsinfrastruktur.

Im modernen Geschäftsumfeld werden in zunehmendem Maße Tablet-PCs, Laptops und Smartphones - auch in Privatbesitz befindliche - innerhalb von Unternehmen verwendet und in die jeweiligen IT-Infrastrukturen bzw. Kommunikationsinfrastrukturen eingebunden. Dies wird häufig mit dem Stichwort "Bring Your Own Device" bzw. BYOD bezeichnet. Derartige Geräte weisen häufig Anwendungen bzw. Apps zum Durchführen von Telefonanrufen sowie Audio- und Videokonferenzen auf. Insbesondere für Videokonferenzen können die relativ großen Bildschirme von Tablet-PCs und Notebooks von Vorteil sein.

Andererseits ist ein häufiges Ein- und Ausstecken von Kabeln zum Herstellen von Kommunikationsverbindungen und zum Sicherstellen einer Stromversorgung unbequem, zeitaufwendig und daher unerwünscht. Ein flexibler und sicherer Betrieb derartiger Geräte muss jedoch in jedem Fall gewährleistet werden.

Derartige Geräte können einerseits als Kommunikationsendpunkte - möglicherweise sogar als die einzigen - innerhalb eines Unternehmens verwendet werden. Andererseits ist die Integration derartiger Geräte ausschließlich über drahtlose Verbindungen, wie beispielsweise WLAN oder mobiles Internet, nicht optimal, da häufig die Sicherheit und/oder die Dienstequalität (Quality of Service bzw. QoS) nur in begrenztem Umfang gewährleistet werden kann.

US 2008/252419 A1 offenbart ein Zugangskontrollsystem, welches eine Dockingstation umfasst, die ausgebildet ist, um eine Rechnervorrichtung drahtlos zu identifizieren und basierend auf der Identifikation, den Zugang zu einer durch die Dockingstation verfügbaren Ressource selektiv zu steuern.

US 2009/197642 A1 eine A/V Steuerung für eine Rechnervorrichtung mit mobilen und erweiterten Rechnereinheiten. Eine Firewall kann in der beschriebenen Konfiguration vorgesehen werden, um die Sicherheit zu verbessern.

US 2010/083012 A1 offenbart ein System zur induktiven Signalübertragung, wobei zumindest zwei Vorrichtungen vorgesehen sind, die induktiv Strom und Daten austauschen können.

Der Erfindung liegt somit die Aufgabe zugrunde, eine hierfür geeignete Dockingstation sowie ein diese enthaltendes Kommunikationssystem und ein entsprechendes Verfahren vorzuschlagen, womit eine flexible und sichere Anbindung von mobilen Kommunikationsendgeräten an eine vorhandene Kommunikationsinfrastrukturbeispielsweise innerhalb eines Unternehmens - ermöglicht werden kann.

Diese Aufgabe wird durch eine Dockingstation gemäß Anspruch 4, ein Kommunikationssystem gemäß Anspruch 9 sowie ein Verfahren gemäß Anspruch 1 gelöst. Vorteilhafte Weiterbildungen der Erfindung sind Gegenstand der abhängigen Ansprüche.

Eine erfindungsgemäße Dockingstation, mit der mobile Kommunikationsendgeräte wie beispielsweise Tablet-PCs und Smartphones an eine Kommunikationsinfrastruktur angebunden werden können, umfasst eine Auflage, auf der das Kommunikationsendgerät abgelegt bzw. gelagert werden kann. Die Dockingstation weist außerdem eine Erfassungseinrichtung auf, mit der erfasst werden kann, ob sich ein Kommunikationsendgerät in der Nähe der Dockingstation befindet und sich innerhalb einer solchen Entfernung von der Dockingstation aufhält, dass es mittels Funk Berechtigungsinformationen an die Dockingstation übermitteln kann. Die Dockingstation weist außerdem eine Prüfeinrichtung zum Überprüfen auf, ob das Kommunikationsendgerät mit der Kommunikationsinfrastruktur, an die es angebunden werden soll, überhaupt kommunizieren darf.

Die Prüfeinrichtung kann dabei eine elektronische Schaltung oder aber eine entsprechende Software zur Überprüfung der Berechtigungsinformationen hinsichtlich der Berechtigung für die Kommunikation sein. Die Erfassungseinrichtung ist beispielsweise eine Nahbereichskommunikationsschnittstelle (Near Field Communication bzw. NFC) oder eine Bluetooth-Schnittstelle, die auf einen in dem Kommunikationsendgerät enthaltenen RFID-Chip oder einen damit versehenen Aufkleber auf dem Kommunikationsendgerät reagiert. Die Dockingstation weist außerdem eine erste Schnittstelle auf, mit der eine erste, drahtlose, Kommunikationsverbindung mit dem Kommunikationsendgerät hergestellt und aufrechterhalten werden kann, sofern die Berechtigung hierzu gegeben ist. Die Dockingstation weist außerdem eine zweite Schnittstelle auf, mit der eine zweite, drahtgebundene, Kommunikationsverbindung zu der Kommunikationsinfrastruktur aufgebaut ist. Als erste und zweite Schnittstelle sind allgemein gesagt solche Schnittstellen vorgesehen, mit denen eine längere oder sogar dauerhafte Kommunikationsverbindung aufgebaut und aufrechterhalten werden kann, über die Kommunikationsdaten übertragen werden können. So ist beispielsweise als erste Schnittstelle eine WLAN-Schnittstelle oder eine (infrastrukturlose) Peer-to-Peer-WLAN-Schnittstelle (P2P-WLAN) vorgesehen. Als zweite Schnittstelle ist beispielsweise eine Ethernet-Schnittstelle geeignet. Die Dockingstation weist außerdem eine Übergabeeinrichtung auf, die ein Durchschalten bzw. Weitervermitteln oder Weiterverbinden der ersten Kommunikationsverbindung an die zweite Kommunikationsverbindung ausführt. Als Beispiel für eine derartige Übergabeeinrichtung ist ein sogenannter Ethernet-Switch und/oder ein Router zu nennen. In dem wahrscheinlichen Fall, dass verschiedene IP-Subdomains verwendet werden, kann der Ethernet-Switch mit Vorteil mit einem Router kombiniert werden.

Die erfindungsgemäße Dockingstation ermöglicht es somit, dass ein mobiles Kommunikationsendgerät bei Annäherung an die Dockingstation automatisch erfasst wird, sich nach Überprüfen der Kommunikationsberechtigung für die Kommunikationsinfrastruktur in die Dockingstation "einbucht" und zur Kommunikationsinfrastruktur weitervermittelt wird. Diese Vorgänge sind in automatisierter und für den Benutzer keine weiteren Handlungen, wie beispielsweise das Ein- oder Umstecken von Kabeln, erfordernder Weise möglich, was sowohl den Bedienungskomfort als auch die Betriebssicherheit und die Qualität der Datenverbindung gewährleistet.

Gemäß einer bevorzugten Ausführungsform der Erfindung ist die Erfassungseinrichtung zum Herstellen einer Nahbereichskommunikation, einer Bluetooth-Verbindung oder beidem ausgelegt. Dies ist in technisch einfacher, erprobter und zuverlässiger Weise möglich.

Es ist bevorzugt, dass die Dockingstation zum Schutz vor Schadsoftware, die beispielsweise vom Kommunikationsendgerät auf die Dockingstation übertragen werden könnte, eine Firewall enthält, die beispielsweise als Application Layer Gateway (ALG) ausgestaltet sein kann. Damit kann unabhängig von der Softwareausstattung des Kommunikationsendgeräts sichergestellt werden, dass keine Schadsoftware über die Dockingstation in die damit verbundene Kommunikationsinfrastruktur gelangen kann. Die Firewall kann außerdem unternehmensspezifische Profile enthalten, die beispielsweise Software, die zwar keine Viren, Trojaner oder ähnliches, allgemein als Schadsoftware bezeichnetes, enthält, abblocken kann, deren Ausführung in dem Unternehmen aber nicht erwünscht ist.

Es ist ferner von Vorteil, wenn die Dockingstation eine Speichereinrichtung enthält, in der ein Authentifizierungsschlüssel gespeichert ist, anhand dessen die Berechtigungsinformationen - die beispielsweise als ein unternehmensspezifisches Zertifikat ausgebildet sein können - daraufhin überprüft werden können, ob die den Authentifizierungsschlüssel speichernde Dockingstation die Standard-Dockingstation für das betreffende Kommunikationsendgerät darstellt. Falls dem so ist, kann die Berechtigung für die Kommunikation des Kommunikationsendgeräts mit der Kommunikationsinfrastruktur von der betreffenden Dockingstation selbst abgeklärt werden, ohne auf weitere Einrichtungen zurückgreifen zu müssen. Dies bietet insbesondere dann einen großen Vorteil, wenn beispielsweise der entsprechende Authentifizierungsservice gerade nicht erreichbar ist.

Für einen Benutzer der erfindungsgemäßen Dockingstation ist es von Vorteil, wenn die Dockingstation eine Ladestation zum Aufladen des Akkus des darauf abgelegten Kommunikationsendgeräts aufweist. Dabei ist es bevorzugt, die Ladestation in universeller Weise auszulegen, so dass verschiedene Kommunikationsendgeräte von unterschiedlichsten Herstellern geladen werden können. Eine weitere Verbesserung des Komforts kann dadurch erzielt werden, dass ein drahtloses Aufladen möglich ist, wie es beispielsweise durch eine induktive Auflademöglichkeit gegeben ist.

Die Audiomöglichkeiten können für einen Benutzer verbessert werden, wenn die erfindungsgemäße Dockingstation einen eingebauten Lautsprecher aufweist, so dass dieser zusätzlich zu dem in dem Kommunikationsendgerät enthaltenen Lautsprecher oder stattdessen benutzt werden kann. Die Dockingstation kann außerdem eine Anzeigevorrichtung aufweisen, damit ein Benutzer bei einem mit der Dockingstation verbundenen Kommunikationsendgerät einen größeren Monitor bzw. ein größeres Display verwenden kann. Alternativ oder zusätzlich kann auch ein Anschluss für ein externes Display vorgesehen sein, was die Vielfalt der Einsatzmöglichkeiten der erfindungsgemäßen Dockingstation noch erhöht.

Die der Erfindung zugrunde liegende Aufgabe wird außerdem mit einem Kommunikationssystem gemäß Anspruch 7 gelöst. Ein derartiges Kommunikationssystem umfasst eine Dockingstation gemäß vorstehender Beschreibung, eine an die Dockingstation mittels einer drahtgebundenen Kommunikationsverbindung angeschlossene Kommunikationsinfrastruktur - beispielsweise derjenigen eines Unternehmens - sowie mindestens ein mobiles Kommunikationsendgerät. Das Kommunikationsendgerät muss hierzu eine Funkübertragungseinrichtung zum Signalisieren seiner Anwesenheit in der Nähe der Dockingstation sowie zum Übertragen von Berechtigungsinformationen an die Dockingstation und außerdem eine erste Schnittstelle für die Herstellung einer ersten, drahtlosen Kommunikationsverbindung mit der Dockingstation aufweisen.

Mit einem derartigen Kommunikationssystem ist es in einfacher und sicherer Weise möglich, mobile Kommunikationsendgeräte problemlos und sicher an eine Kommunikationsinfrastruktur anzubinden. Für das erfindungsgemäße Kommunikationssystem gelten die in Bezug auf die Dockingstation genannten Vorteile und Merkmale in gleicher bzw. analoger Weise. Diese Vorteile und Merkmale gelten außerdem für das nachstehend genannte erfindungsgemäße Verfahren in analoger Weise.

Die der Erfindung zugrunde liegende Aufgabe wird außerdem gelöst mit einem Verfahren für die Anwendung eines mobilen Kommunikationsendgeräts an eine zumindest teilweise drahtbasierte Kommunikationsinfrastruktur gemäß Anspruch 8. "Zumindest teilweise drahtbasiert" bedeutet hierbei, dass die genannte Kommunikationsinfrastruktur zumindest mit einer drahtgebundenen Kommunikationsverbindung mit der Dockingstation verbunden ist, wie dies beispielsweise mittels einer Ethernet-Verbindung geschehen kann. Innerhalb der können dann auch drahtlose Verbindungen vorgesehen sein. Das Verfahren weist folgende Schritte auf: Bei Annäherung an die Dockingstation überträgt das Kommunikationsendgerät Berechtigungsinformationen an die Dockingstation, die dann diese Berechtigungsinformationen daraufhin überprüft, ob das Kommunikationsendgerät mit der Kommunikationsinfrastruktur kommunizieren darf. Falls dies der Fall ist, wird eine erste, drahtlose, Kommunikationsverbindung zwischen dem Kommunikationsendgerät und der Dockingstation hergestellt, wobei die Dockingstation mittels einer zweiten, drahtgebundenen, Kommunikationsverbindung mit der Kommunikationsinfrastruktur verbunden ist. Die aufgebaute erste Kommunikationsverbindung wird dann an die zweite Kommunikationsverbindung durchgeschaltet bzw. weitervermittelt, so dass das Kommunikationsendgerät in Kommunikation mit der Kommunikationsinfrastruktur treten kann.

Gemäß einer vorteilhaften Weiterbildung des erfindungsgemäßen Verfahrens stellt das Kommunikationsendgerät dann, wenn die erste Kommunikationsverbindung (und damit auch die zweite Kommunikationsverbindung) unterbrochen wird, eine dritte, ebenfalls drahtlose, Kommunikationsverbindung zu einem Kommunikationsnetzwerk seiner Wahl her. Das heißt, dass das Kommunikationsendgerät dann automatisch auf einen anderen "Kanal" umschaltet bzw. sich auf diesem anderen Kanal einbucht.

Gemäß einer vorteilhaften Weiterbildung des erfindungsgemäßen Verfahrens werden die Berechtigungsinformationen in Form eines Zertifikats übermittelt, das von der Kommunikationsinfrastruktur ausgegeben oder zumindest autorisiert worden ist. Das Zertifikat wird dabei durch einen dedizierten oder gemeinsamen Service - lokal oder in der Cloud - validiert, der daraufhin die erforderlichen Daten für den Aufbau der drahtlosen, ersten Kommunikationsverbindung vom mobilen Kommunikationsendgerät zur Dockingstation an die Dockingstation sendet. Die erste Kommunikationsverbindung ist dabei vorzugsweise eine P2P-Verbindung. Die Dockingstation baut daraufhin die P2P-Verbindung via WLAN zum Kommunikationsendgerät auf. Diese Verbindung wird dann - vorzugsweise über einen Ethernet-Switch - in der Dockingstation zur zweiten Kommunikationsverbindung (vorzugsweise ein LAN, das über Ethernet hergestellt worden ist) weitergereicht.

Es versteht sich, dass das Verfahren gemäß der vorliegenden Erfindung auch in Form eines Computerprogramms bzw. eines Computerprogrammprodukts implementiert sein kann, und dass auch ein eine solche Software speichernder maschinenlesbarer Datenträger als Gegenstand der vorliegenden Erfindung anzusehen ist.

Weitere Vorteile, Merkmale und Besonderheiten der vorliegenden Erfindung ergeben sich aus der nachfolgenden Beschreibung vorteilhafter Ausführungsformen unter Bezugnahme auf die Zeichnung. Es zeigen schematisch:
- Fig. 1: eine schematische Darstellung eines erfindungsgemäßen Kommunikationssystems, das eine erfindungsgemäße Dockingstation enthält, und
- Fig. 2: einen Ablaufplan für eine Ausführungsform des erfindungsgemäßen Verfahrens.

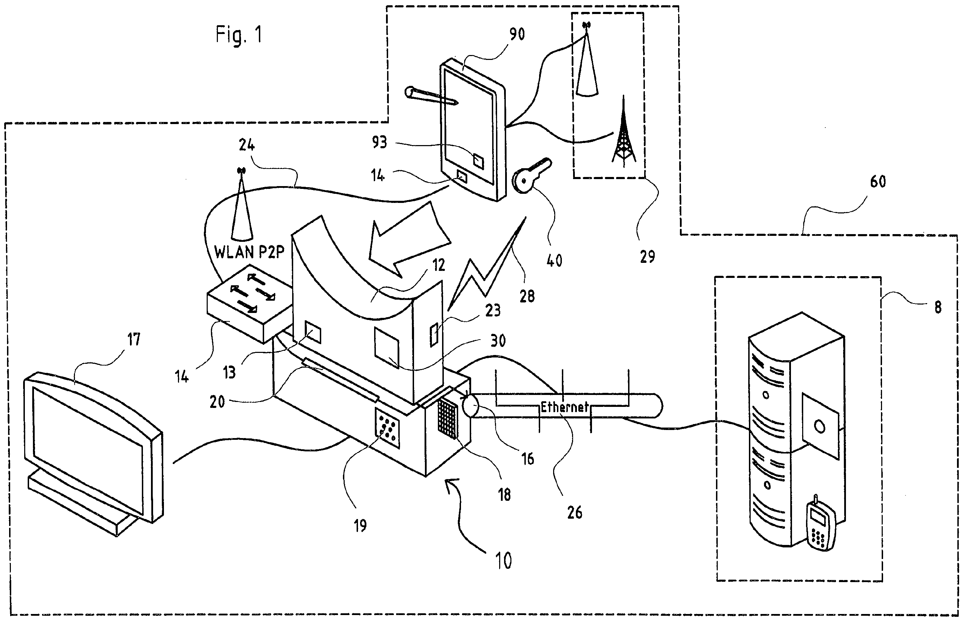

In Fig. 1 ist eine schematische Darstellung eines erfindungsgemäßen Kommunikationssystems 60 angegeben. Mit der Bezugszahl 8 ist eine Kommunikationsinfrastruktur beispielsweise eines Unternehmens bezeichnet. Mit der Bezugszahl 90 ist ein Tablet-PC bezeichnet, der an die Kommunikationsinfrastruktur 8 angebunden werden soll. Der Tablet-PC 90 ist üblicherweise - also in der Regel außerhalb eines Unternehmens, in dessen IT-Struktur er eingebunden werden soll - an ein Kommunikationsnetzwerk 29, wie beispielsweise eine Funkinfrastruktur (WLAN oder Mobilfunknetz) angebunden. Der Tablet-PC 90 weist eine NFC- und/oder Bluetooth-Schnittstelle auf, oder er enthält einen RFID-Aufkleber. In dem Tablet-PC 90 bzw. in dem auf ihm befindlichen Aufkleber ist neben Informationen für den Aufbau einer P2P-Verbindung zu einer Dockingstation 10 ein Zertifikat 40 gespeichert, welches Berechtigungsinformationen enthält und durch das Infrastruktur-Management des Unternehmens, an das der Tablet-PC 90 angebunden werden soll, ausgegeben wurde. Alternativ kann es sich auch um ein von anderer Stelle ausgegebenes, jedoch von dem betreffenden Unternehmen autorisiertes Zertifikat handeln. Die NFC- bzw. Bluetooth-Schnittstelle bildet dabei eine Funkübertragungseinrichtung 93, mit der der Tablet-PC 90 seine Anwesenheit in der Nähe der Dockingstation 10 signalisieren kann. Außerdem dient diese Schnittstelle zum Übertragen des Zertifikats 40 an die Dockingstation 10.

Die Dockingstation 10 wiederum umfasst eine Auflage 12, die in Fig. 1 als gerundete Fläche dargestellt ist, für das Ablegen bzw. das Lagern des Tablet-PCs 90. Außerdem enthält die Dockingstation 10 eine Erfassungseinrichtung 23 (beispielsweise eine RFID-Schaltung) zum Erfassen des Vorhandenseins des Tablet-PCs 90.

Sowohl der Tablet-PC 90 als auch die Dockingstation 10 weisen je eine P2P-WLAN-Schnittstelle 14 auf, mit denen sie eine entsprechende Kommunikationsverbindung 24 herstellen können. Die Dockingstation 10 weist außerdem eine Ethernet-Schnittstelle 16 auf, mittels der eine weitere Kommunikationsverbindung 26 (eine Ethernet-Verbindung) mit der Kommunikationsinfrastruktur 8 des betreffenden Unternehmens hergestellt ist.

Sobald der Tablet-PC 90 in die Nähe bzw. in die Funkreichweite der Dockingstation 10 gelangt, wird diese Annäherung erfasst und das Zertifikat 40 über die NFC-/Bluetooth-Schnittstelle 14 an die Dockingstation 10 übertragen. Das Zertifikat 40 wird durch einen dedizierten oder gemeinsamen Service - der lokal oder aber auch in der Cloud sein kann - validiert, der daraufhin die erforderlichen Daten für den Aufbau einer P2P-Verbindung vom Tablet-PC 90 an die Dockingstation 10 sendet. Die Dockingstation 10 baut dann die P2P-Verbindung über WLAN auf. Anschließend wird diese Verbindung mittels einer Übergabeeinrichtung 20 in Form eines Ethernet-Switches und/oder Routers in der Dockingstation 10 zum LAN 26 weitergereicht.

Es bleibt festzuhalten, dass der Tablet-PC 90 nur stellvertretend für die mobilen Kommunikationsendgeräte bzw. Telekommunikationsendgeräte steht, die mittels der vorliegenden Erfindung unter Verwendung der Dockingstation 10 an die Kommunikationsinfrastruktur 8 angebunden werden können.

Bricht die WLAN-Verbindung 24 zwischen dem Tablet-PC 90 und der Dockingstation 10 ab, wird auch die Verbindung zum LAN 26 unterbrochen. Der Tablet-PC 90 schaltet dann zum bevorzugten Funknetzwerk 29 um, das heißt, er bucht sich in das Funknetzwerk 29 ein.

Die Dockingstation 10 weist außerdem einen nur schematisch angedeuteten eingebauten Lautsprecher 19 auf. Das heißt, dass dieser Lautsprecher 19 zur Verbesserung der Audio-Qualität der Dockingstation 10 - entweder zusätzlich oder anstatt der Verwendung des Lautsprechers des Tablet-PCs 90 - verwendet werden kann. Außerdem weist die Dockingstation 10 einen Anschluss zum Anschließen eines externen Monitors 17 auf, der für eine Replikation der Anzeige des Tablet-PCs 90 auf einen externen Bildschirm verwendet werden kann, sofern der Tablet-PC 90 dies zulässt. Alternativ unterstützt die Dockingstation es, Wiedergabegeräte drahtlos anschließen zu können, wie z.B. über den Standard der "Digital Living Network Alliance" DLNA (vgl. http://www.dlna.org/) oder wirelessUSB.

In der Dockingstation 10 ist ferner eine Firewall 18 integriert, die zuverlässig und unabhängig von der Ausgestaltung des Kommunikationsendgeräts 90, das über die Dockingstation 10 an die Kommunikationsinfrastruktur 8 angeschlossen werden soll, verhindern kann, dass Schadsoftware oder unerwünschte Software über die Dockingstation 10 auf die Kommunikationsinfrastruktur 8 gelangt. Die Dockingstation 10 weist außerdem einen Speicher 13 auf, in dem ein Authentifizierungsschlüssel gespeichert ist, der die betreffende Dockingstation 10 als Standard-Dockingstation für ein spezielles Kommunikationsendgerät 90 ausweist. Hierdurch kann das entsprechende Kommunikationsendgerät 90 sofort über die Dockingstation 10 an die Kommunikationsinfrastruktur 8 angebunden werden, ohne dass eine Validierung des Zertifikats 40 über einen entsprechenden Service durchgeführt werden muss. Somit ist die Validierung und damit die Anbindung auch dann möglich, falls der Service gerade nicht zur Verfügung steht.

Die Dockingstation 10 weist außerdem eine nur schematisch angedeutete UniversalLadestation 11 auf, mittels der der Akku eines über die Dockingstation 10 angebundenen Kommunikationsendgeräts 90 unabhängig von seiner genauen Konfiguration und Ausstattung drahtlos aufgeladen werden kann. Dies verbessert den Komfort der Benutzung der Dockingstation 10 sowie die Vielseitigkeit von deren Benutzung erheblich.

An der Dockingstation 10 befindet sich außerdem ein weiterer (nicht dargestellter) Ethernet-Anschluss, an dem beispielsweise ein PC gemäß dem Prinzip "One-wire-to-the-desk" bzw. "Nur-ein-Kabel-zum-Schreibtisch" angeschlossen werden kann.

Der externe Monitor 17 kann beispielsweise mittels eines HDMI-, DVI- oder VGA-Kabels an die Dockingstation 10 angeschlossen werden.

Statt oder zusätzlich zu der vorstehend beschriebenen Möglichkeit der Erfassung der Annäherung bzw. Gegenwart eines Kommunikationsendgeräts 90 bei der Dockingstation 10 mittels Funk kann auch die Verwendung eines mechanischen Schalters bzw. einer Druckkontaktfläche (auf der das Kommunikationsendgerät 90 abgelegt werden kann) vorgesehen sein.

Es bleibt festzuhalten, dass mit der vorliegenden Erfindung beliebige mobile Kommunikationsendgeräte wie Smartphones, Tablet-PCs etc. in sicherer, bequemer und flexibler Weise in die IT-Struktur eines Unternehmens eingebunden werden können. Durch Verwendung der Peer-to-Peer-WLAN-Verbindung kann Traffic in vorteilhafter Weise vom WLAN der Infrastruktur umgeleitet werden.

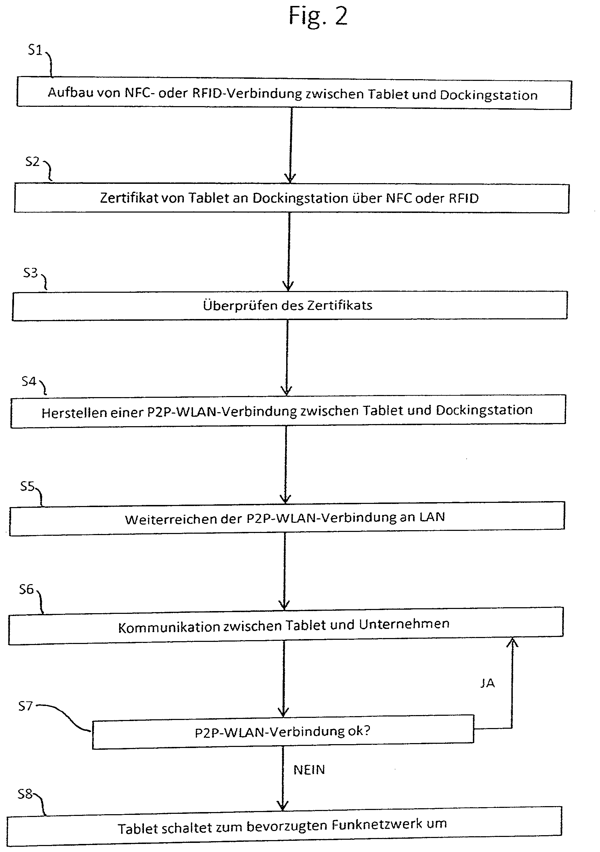

Schließlich soll anhand von Fig. 2 der Ablauf des erfindungsgemäßen Verfahrens zum Anbinden eines mobilen Kommunikationsendgeräts 90 an eine zumindest teilweise drahtbasierte Kommunikationsinfrastruktur 8 eines Unternehmens zusammenfassend dargestellt werden: In Schritt S1 wird zunächst eine Nahfeldbereichskommunikation (NFC-Verbindung) oder eine RFID-Verbindung zwischen dem Tablet-PC 90 und der Dockingstation 10 aufgebaut, sobald sich der Tablet-PC 90 an die Dockingstation 10 soweit angenähert hat, dass der Aufbau dieser Verbindung möglich geworden ist. Danach wird ein Zertifikat 40 vom Tablet-PC 90 an die Dockingstation 10 über die erwähnte Verbindung geschickt (vergleiche Schritt S2). Schließlich wird im Schritt S3 das Zertifikat 40 überprüft und gemäß Schritt S4 bei gültigem Zertifikat 40 eine P2P-WLAN-Verbindung zwischen dem Tablet-PC 90 und der Dockingstation 10 hergestellt. Diese Verbindung wird dann in Schritt S5 an das LAN, mit dem die Dockingstation 10 an die Kommunikationsinfrastruktur 8 angebunden ist, weitergeleitet. Danach kann in Schritt S6 die Kommunikation zwischen dem Tablet-PC 90 und dem Unternehmen erfolgen. Diese Möglichkeit der Kommunikation bleibt solange gewahrt, solange die P2P-WLAN-Verbindung zwischen Tablet-PC 90 und Dockingstation 10 sowie die LAN-Verbindung 26 zwischen der Dockingstation 10 und der Kommunikationsinfrastruktur 8 funktioniert. Sobald gemäß Schritt S7 eine Prüfung der Funktionstüchtigkeit dieser Verbindung ergibt, dass diese nicht mehr oder nicht ausreichend funktioniert, schaltet der Tablet-PC 90 gemäß Schritt S8 automatisch auf eine Kommunikation mit einem entsprechenden Funknetzwerk 29 seiner Wahl um, damit er zumindest eine gewisse Kommunikationsfähigkeit - beispielsweise den Zugang zum Internet - behält.

Es ist festzuhalten, dass die unter Bezug auf die dargestellten Ausführungsformen beschriebenen Merkmale der Erfindung, wie beispielsweise die Art und Ausgestaltung der einzelnen Geräteteile, Schnittstellen und Kommunikationsverbindungen, auch bei anderen Ausführungsformen vorhanden sein können, außer wenn es anders angegeben ist oder sich aus technischen Gründen von selbst verbietet.

### Bezugszeichenliste

8 = Kommunikationsinfrastruktur
10 = Dockingstation
11 = Universalladestation
12 = Auflage
13 = Speichereinrichtung
14 = erste Schnittstelle
16 = zweite Schnittstelle
17 = Anzeigeeinrichtung/externes Display
18 = Firewall
19 = Lautsprecher
20 = Übergabeeinrichtung
23 = Erfassungseinrichtung
24 = erste Kommunikationsverbindung
26 = zweite Kommunikationsverbindung
28 = dritte Kommunikationsverbindung
29 = Kommunikationsnetzwerk/Funknetzwerk
30 = Prüfeinrichtung
40 = Berechtigungsinformationen/Zertifikat
60 = Kommunikationssystem
90 = Kommunikationsendgerät/Tablet-PC
93 = Funkübertragungseinrichtung

## Patentansprüche

1. Verfahren für die Anbindung eines mobilen Kommunikationsendgeräts (90) an eine zumindest teilweise drahtbasierte Kommunikationsinfrastruktur (8), umfassend folgende Schritte:
- Funkübertragung eines Berechtigungsinformationen enthaltenden Zertifikats (40) vom Kommunikationsendgerät (90) an eine Dockingstation (10),
- Weiterleitung des Zertifikats (40) von der Dockingstation (10) an einen Validierungsservice,
- Validierung des Zertifikats (40) durch den Validierungsservice, ob das Kommunikationsendgerät (90) über eine Berechtigung zur Kommunikation mit der Kommunikationsinfrastruktur (8) verfügt,
- bei vorhandener Berechtigung Senden der erforderlichen Daten für den Aufbau einer drahtlosen P2P-Verbindung vom Kommunikationsendgerät (90) an die Dockingstation (10) und Aufbau, durch die Dockingstation (10), einer ersten P2P-Kommunikationsverbindung via WLAN zu dem Kommunikationsendgerät und anschließend Durchschalten, mittels einer Übergabeeinrichtung (20) in der Dockingstation (10), der ersten P2P-Kommunikationsverbindung zu einer zweiten, drahtgebundenen Kommunikationsverbindung (26), wobei die zweite, drahtgebundene Kommunikationsverbindung (26) mit der Kommunikationsinfrastruktur (8) verbunden ist,
wobei die durchgeschaltete Verbindung über eine Application-Layer-Gateway-Firewall auf der Dockingstation (10) zur Blockierung von Schadsoftware oder unerwünschter Software auf der Kommunikationsinfrastruktur (8) durchgeleitet wird.

2. Verfahren nach Anspruch 1,
**dadurch gekennzeichnet, dass** das Kommunikationsendgerät (90) bei der Unterbrechung der ersten Kommunikationsverbindung (24) eine dritte, drahtlose Kommunikationsverbindung (28) zu einem Kommunikationsnetzwerk (29) herstellt.

3. Verfahren nach Anspruch 1 oder 2,
**dadurch gekennzeichnet, dass** das Zertifikat (40) von der Kommunikationsinfrastruktur (8) ausgegeben oder autorisiert worden ist.

4. Dockingstation (10) für die Anbindung eines mobilen Kommunikationsendgeräts (90) an eine zumindest teilweise drahtbasierte Kommunikationsinfrastruktur (8) gemäß dem Verfahren nach einem der Ansprüche 1 bis 3, umfassend:
- eine Auflage (12) für die Lagerung des Kommunikationsendgeräts (90),
- eine Erfassungseinrichtung (23) für das Erfassen des Vorhandenseins des Kommunikationsendgeräts (90) innerhalb einer die Funkübertragung eines Berechtigungsinformationen enthaltenden Zertifikats (40) vom Kommunikationsendgerät (90) an die Dockingstation (10) ermöglichenden Entfernung und für den Empfang des Zertifikats (40),
- eine Prüfeinrichtung (30) zum Validieren des Zertifikats (40) zum Überprüfen der Berechtigung des Kommunikationsendgeräts (90) zur Kommunikation mit der Kommunikationsinfrastruktur (8) nach Maßgabe des Zertifikats (40) sowie zum Senden der erforderlichen Daten für den Aufbau einer P2P-Verbindung vom Kommunikationsendgerät (90) an die Dockingstation (10),
- eine erste P2P-WLAN-Schnittstelle (14) für die Herstellung einer ersten, drahtlosen P2P-Kommunikationsverbindung (24) mit dem Kommunikationsendgerät (90) bei vorhandener Berechtigung,
- eine zweite Schnittstelle (16) für die anschließende Herstellung einer zweiten, drahtgebundenen Kommunikationsverbindung (26) zu der Kommunikationsinfrastruktur (8), und
- eine Übergabeeinrichtung (20) zum Durchschalten der ersten Kommunikationsverbindung (24) an die zweite Kommunikationsverbindung (26) über eine Application-Layer-Gateway-Firewall, welche ausgestaltet ist, um Schadsoftware oder unerwünschte Software auf der Kommunikationsinfrastruktur (8) zu blockieren.

5. Dockingstation (10) nach Anspruch 4,
**dadurch gekennzeichnet, dass** die Erfassungseinrichtung (23) für das Herstellen von Nahbereichskommunikation und/oder einer Bluetooth-Verbindung ausgelegt ist.

6. Dockingstation (10) nach einem der Ansprüche 4 bis 5,
**dadurch gekennzeichnet, dass** sie eine Speichereinrichtung (13) zum Speichern eines Authentifizierungsschlüssels für die Berechtigungsinformationen des Zertifikats (40) aufweist, der die betreffende Dockingstation (10) als Standardvorrichtung ausweist.

7. Dockingstation (10) nach einem der Ansprüche 4 bis 6,
**dadurch gekennzeichnet, dass** sie eine Universalladestation (11) zum Aufladen des Akkus des Kommunikationsendgeräts (9) aufweist, wobei die Universalladestation (11) vorzugsweise zum drahtlosen Aufladen geeignet ist.

8. Dockingstation (10) nach einem der Ansprüche 4 bis 7,
**dadurch gekennzeichnet, dass** sie einen Lautsprecher (19) und/oder eine Anzeigeeinrichtung (17) und/oder einen drahtgebundenen oder drahtlosen Anschluss für ein externes Display (17) aufweist.

9. Kommunikationssystem (60), umfassend
- eine Dockingstation (10) gemäß einem der Ansprüche 4 bis 8,
- eine Kommunikationsinfrastruktur (8), die mittels einer drahtgebundenen Kommunikationsverbindung (26) mit der Dockingstation (10) verbunden ist, und
- mindestens ein mobiles Kommunikationsendgerät (90), das aufweist:
- eine Funkübertragungseinrichtung (93) zum Signalisieren seiner Anwesenheit in der Nähe der Dockingstation (10) sowie zum Übertragen eines Berechtigungsinformationen enthaltenden Zertifikats (40) an die Dockingstation (10) sowie
- eine erste Schnittstelle (14) für die Herstellung einer ersten, drahtlosen P2P-Kommunikationsverbindung (24) mit der Dockingstation (10).

## Claims

1. A method for the connection of a mobile communication terminal (90) to a communications infrastructure that is at least partially wire-based (8), comprising the following steps:
- wireless transfer from the communication terminal (90) to a docking station (10) of a certificate (40) containing authorization information,
- forwarding of the certificate (40) from the docking station (10) to a validation service,
- validation of the certificate (40) by the validation service, regarding whether the communication terminal (90) is authorized to communicate with the communications infrastructure (8),
- if the authorization is present, sending the data required for establishing a wireless P2P link from the communication terminal (90) to the docking station (10) and establishing, by means of the docking station (10), a first P2P communication link to the communication terminal via WLAN, followed by interconnecting, by means of a transfer device (20) in the docking station (10), the first P2P communication link to a second, wired communication link (26), wherein the second, wired communication link (26) is linked with the communications infrastructure (8), wherein the interconnection is established by means of an application layer gateway firewall at the docking station (10) for blocking malware or undesired software in the communications infrastructure (8).

2. The method according to Claim 1, **characterized in that,** in case the first communication link (24) is interrupted, the communication terminal (90) establishes a third, wireless communication link (28) to a communication network (29).

3. The method according to Claim 1 or 2, **characterized in that** the certificate (40) has been issued or authorized by the communications infrastructure (8).

4. A docking station (10) for the connection of a mobile communication terminal (90) to a communications infrastructure (8) that is at least partially wire-based according to the method according to any one of Claims 1 to 3, comprising:
- a support (12) for storing the communication terminal (90),
- a detection device (23) for detecting the presence of the communication terminal (90) within a distance allowing the wireless transfer of a certificate (40) containing the authorization information from the communication terminal (90) to the docking station (10), and for receiving said certificate (40),
- a verification device (30) for validating the certificate (40) to verify the authorization of the communication terminal (90) to communicate with the communications infrastructure (8) according to the certificate (40), as well as for sending the data required for establishing a P2P link from the communication terminal (90) to the docking station (10),
- a first P2P-WLAN interface (14) for creating a first, wireless P2P communication link (24) with the communication terminal (90) if the authorization is present,
- a second interface (16) for subsequently creating a second, wired communication link (26) to the communications infrastructure (8), and
- a transfer device (20) for interconnecting the first communication link (24) with the second communication link (26) via an application layer gateway firewall, which is equipped to block malware or undesired software in the communications infrastructure (8).

5. The docking station (10) according to Claim 4, **characterized in that** the detection device (23) is designed to establish close-range communication and/or a Bluetooth link.

6. The docking station (10) according to any one of Claims 4 to 5, **characterized in that** it includes a storage device (13) for storing an authorization key for the authorization information of the certificate (40), said key identifying the respective docking station (10) as standard equipment.

7. The docking station (10) according to any one of Claims 4 to 6, **characterized in that** it includes a universal charging station (11) for charging the battery of the communication terminal (9), wherein the universal charging station (11) preferably is suitable for wireless charging.

8. The docking station (10) according to any one of Claims 4 to 7, **characterized in that** it includes a loudspeaker (19) and/or an indicator device (17) and/or a wired or wireless connection for an external display (17).

9. A communications system (60) comprising
- a docking station (10) according to any one of Claims 4 to 8,
- a communications infrastructure (8), which is connected with the docking station (10) by means of a wired communication link (26), and
- at least one mobile communication terminal (90), which includes:
- a wireless transfer device (93) for signaling its presence in the vicinity of the docking station (10) and for transferring a certificate (40) containing authorization information to the docking station (10), as well as
- a first interface (14) for establishing a first, wireless P2P communication link (24) with the docking station (10).

## Revendications

1. Procédé de connexion d'un terminal de communication mobile (90) à une infrastructure de communication au moins partiellement filaire (8), comportant les étapes suivantes :
- la transmission radio d'un certificat (40), contenant des informations d'autorisation, du terminal de communication (90) à une station d'accueil (10),
- le transfert du certificat (40) de la station d'accueil (10) à un service de validation,
- la validation du certificat (40) par le service de validation, si le terminal de communication (90) dispose d'une autorisation pour la communication avec l'infrastructure de communication (8),
- en cas d'autorisation présente, l'envoi des données nécessaires pour l'établissement d'une liaison P2P sans fil du terminal de communication (90) à la station d'accueil (10) et l'établissement, par la station d'accueil (10), d'une première liaison de communication P2P via WLAN au terminal de communication et, ensuite, l'interconnexion, au moyen d'un système de remise (20) dans la station d'accueil (10), de la première liaison de communication P2P à une deuxième liaison de communication filaire (26), dans lequel la deuxième liaison de communication filaire (26) est reliée à l'infrastructure de communication (8),
dans lequel la liaison interconnectée est acheminée par le biais d'un pare-feu de passerelle de couche d'application sur la station d'accueil (10) pour le blocage de logiciel malveillant ou de logiciel non souhaité sur l'infrastructure de communication (8).

2. Procédé selon la revendication 1,
**caractérisé en ce que** le terminal de communication (90), en cas d'interruption de la première liaison de communication (24), crée une troisième liaison de communication sans fil (28) vers un réseau de communication (29).

3. Procédé selon la revendication 1 ou 2,
**caractérisé en ce que** le certificat (40) a été émis ou autorisé par l'infrastructure de communication (8).

4. Station d'accueil (10) pour la connexion d'un terminal de communication mobile (90) à une infrastructure de communication au moins partiellement filaire (8) selon le procédé selon l'une quelconque des revendications 1 à 3, comportant :
- un support (12) pour la pose du terminal de communication (90),
- un système de détection (23) pour la détection de la présence du terminal de communication (90) à l'intérieur d'une distance permettant la transmission radio d'un certificat (40) contenant des informations d'autorisation du terminal de communication (90) à la station d'accueil (10) et pour la réception du certificat (40),
- un système de contrôle (30) pour la validation du certificat (40) pour la vérification de l'autorisation du terminal de communication (90) pour la communication avec l'infrastructure de communication (8) conformément au certificat (40) ainsi que pour l'envoi des données nécessaires pour l'établissement d'une liaison P2P du terminal de communication (90) à la station d'accueil (10),
- une première interface WLAN P2P (14) pour la création d'une première liaison de communication P2P sans fil (24) avec le terminal de communication (90) en cas d'autorisation présente,
- une seconde interface (16) pour la création subséquente d'une deuxième liaison de communication filaire (26) vers l'infrastructure de communication (8), et
- un système de remise (20) pour l'interconnexion de la première liaison de communication (24) à la deuxième liaison de communication (26) par le biais d'un pare-feu de passerelle de couche d'application, qui est conçu pour bloquer un logiciel malveillant ou un logiciel non souhaité sur l'infrastructure de communication (8).

5. Station d'accueil (10) selon la revendication 4,
**caractérisée en ce que** le système de détection (23) est agencé pour la création d'une communication en champ proche et/ou d'une liaison Bluetooth.

6. Station d'accueil (10) selon l'une quelconque des revendications 4 à 5,
**caractérisée en ce qu'**elle comprend un système de stockage (13) pour le stockage d'une clé d'authentification pour les informations d'autorisation du certificat (40), qui identifie la station d'accueil (10) concernée comme dispositif standard.

7. Station d'accueil (10) selon l'une quelconque des revendications 4 à 6,
**caractérisée en ce qu'**elle comprend une station de charge universelle (11) pour la charge de l'accumulateur du terminal de communication (9), dans laquelle la station de charge universelle (11) est appropriée de préférence pour la charge sans fil.

8. Station d'accueil (10) selon l'une quelconque des revendications 4 à 7,
**caractérisée en ce qu'**elle comprend un haut-parleur (19) et/ou un système d'affichage (17) et/ou un raccordement filaire ou sans fil pour un dispositif d'affichage externe (17).

9. Système de communication (60), comportant
- une station d'accueil (10) selon l'une quelconque des revendications 4 à 8,
- une infrastructure de communication (8), qui est reliée au moyen d'une liaison de communication filaire (26) à la station d'accueil (10), et
- au moins un terminal de communication mobile (90) qui comprend :
- un système de transmission radio (93) pour la signalisation de sa présence à proximité de la station d'accueil (10) ainsi que pour la transmission d'un certificat (40) contenant des informations d'autorisation à la station d'accueil (10) ainsi que
- une première interface (14) pour la création d'une première liaison de communication P2P sans fil (24) avec la station d'accueil (10).
